# EUROPEAN PATENT APPLICATION

(11) **EP 3 591 382 A1**
(43) Date of publication of application: **08.01.2020**
(21) Application number: 19184792.0
(22) Date of filing: 05.07.2019
(51) Int. Cl.: G01N 21/64

(54) **OPTICAL MODULE FOR MULTI-WAVELENGTH FLUORESCENCE DETECTION**

(30) Priority: 06.07.2018 CN 201810738900
(71) Applicant: Guangzhou Labsim Biotech Co., Ltd., Guangzhou, Guangdong 510670 (CN)
(72) Inventor: WANG, Zhicai, Guangzhou, Guangdong 510670 (CN); FU, Wenbo, Guangzhou, Guangdong 510670 (CN); ZHANG, Yili, Guangzhou, Guangdong 510670 (CN)
(74) Representative: Vitina, Maruta

(57) **Abstract**

The present disclosure relates to medical equipment and describes an optical module for multi-wavelength fluorescence detection. The optical module includes an excitation light source component (2) having at least one excitation light channel and including a first dichroic mirror (31) and at least one light source (21) for generating irradiation light; a color filter component (3) for forming multiple fluorescence transmission paths; and a fluorescence receiving component (4) having multiple fluorescence receiving channels. The first dichroic mirror (31) is arranged at an irradiation light path of respective light sources (21). The color filter component (3) is arranged at a transmission light path of the first dichroic mirror (31) and includes at least one second dichroic mirror (32) for receiving fluorescence signals. The fluorescence receiving component (4) includes a plurality of optical elements (43), which are respectively arranged at a reflection and/or transmission light path of the second dichroic mirror (32). The disclosure shows the simultaneous and instantaneous detection of multi-wavelength fluorescence.

## Description

### TECHNICAL FIELD

The application relates to medical equipments, and more particularly to an optical module for multi-wavelength fluorescence detection.

### BACKGROUND

Dry fluorescence detection technology has made a great progress recently and is suitable for the rapid medical detection due to the use of a dry fluorescence test card as a carrier and a combination of a test optical path, a barcode reader and a test platform. Moreover, this technology has advantages of high sensitivity, good selectivity, less sample consumption and simple operation, widely applicable to medical detection.

The single-wavelength excitation light irradiation used in conventional dry immunofluorescence assays for test card samples is gradually replaced with multi-wavelength excitation light irradiation. However, the existing multi-wavelength detection is performed by switching the filter set and repeating the detection, which is time-consuming. Besides, the filter set needs to be repeatedly positioned so that the positioning accuracy is affected by the movement mechanism and the reliability is reduced due to the movement. Moreover, the extended time may result in fluorescence decay and degradation of the reagent, which is not conducive to the detection.

### SUMMARY

An object of the application is to provide an optical module for multi-wavelength fluorescence detection, which comprises a light source capable of emitting multiple wavelengths to detect samples, so that fluorescence of different wavelengths is excited to form multiple fluorescence transmission paths.

The technical solutions of the application are described as follows.

The application provides an optical module for multi-wavelength fluorescence detection, comprising:
an excitation light source component having at least one excitation light channel and comprising a first dichroic mirror and at least one light source for generating irradiation light, the first dichroic mirror being arranged at an irradiation light path of respective light sources;
a color filter component for forming multiple fluorescence transmission paths, the color filter component being arranged at a transmission light path of the first dichroic mirror and comprises at least one second dichroic mirror for receiving a fluorescence signal; and
a fluorescence receiving component having multiple fluorescence receiving channels and comprising a plurality of optical elements, each optical element being arranged at a reflection light path and/or a transmission light path of the second dichroic mirror.

In an embodiment, the excitation light source component further comprises a forth dichroic mirror, and the forth dichroic mirror is arranged between respective light sources and the first dichroic mirror.

In an embodiment, a collimation lens is arranged between the forth dichroic mirror and respective light sources.

In an embodiment, a first optical filter is arranged between some of the light sources and the forth dichroic mirror.

In an embodiment, the excitation light source component further comprises a first convex lens which is arranged at a reflection light path of the first dichroic mirror.

In an embodiment, at least two second dichroic mirrors are sequentially arranged, and the second dichroic mirror adjacent to the first dichroic mirror is arranged at the transmission light path of the first dichroic mirror and the second dichroic mirror away from the first dichroic mirror is arranged at a transmission light path of the former second dichroic mirror.

In an embodiment, the fluorescence receiving component further comprises a plurality of second optical filters and second convex lenses for collecting fluorescence signals on respective optical elements; and each second optical filters and each second convex lens are both arranged between each optical element and respective second dichroic mirrors.

In an embodiment, the optical elements are photomultiplier tubes.

In an embodiment, the light source is a LED or a laser.

The application has the following beneficial effects.

The application employs a plurality of light sources to generate various irradiation lights of different wavelengths, which are directed to the samples through the first dichroic mirror to generate various fluorescence signals of different wavelengths. Then these fluorescence signals are treated by the second dichroic mirror to form multiple fluorescence transmission paths. Some of the fluorescence is transmitted along the reflection light path of the second dichroic mirror while the rest of the fluorescence is transmitted along the transmission light path of the second dichroic mirror. Subsequently, the fluorescence of different wavelengths is received by respective optical elements. The application comprises a light source capable of exciting the sample to generate fluorescence of different wavelengths by emitting lights of various wavelengths, thereby forming multiple fluorescence transmission paths. The invention enables the instant and simultaneous detection of multi-wavelength fluorescence, greatly improving the efficiency. Moreover, the carrier of the sample is allowed for a shorter movement time, which reduces the attenuation of the sample, improving the reliability of the multi-wavelength fluorescence detection.

### BRIEF DESCRIPTION OF THE DRAWINGS

The accompanying drawings used in the following embodiments will be briefly illustrated for clearer description of the technical solutions of the application. Obviously, the drawings merely show a part of the embodiments of the application. Other technical solutions and drawings may be obtained by those skilled in the art according to the drawings without paying any creative effort.
Fig. 1 schematically shows a simplified structure of the application.
Fig. 2 schematically shows the structure of the application.

### DETAILED DESCRIPTION OF EMBODIMENTS

The concepts, specific structure and technical effects of the invention will be clearly and completely described below with reference to the embodiments and the accompanying drawings to make the objects, features and effects of the invention fully understood. Obviously, the described embodiments are merely a part of the embodiments of the invention and are not all of the embodiments. Those skilled in the art may obtain other embodiments based on the embodiments of the invention without paying any creative efforts, which should still fall within the scope of the invention. In addition, the coupling and connection used herein are not intended to merely indicate the direct connection between the members, but are intended to indicate that a coupling accessory can be optionally introduced or removed according to the specific requirement to form a better coupling structure.

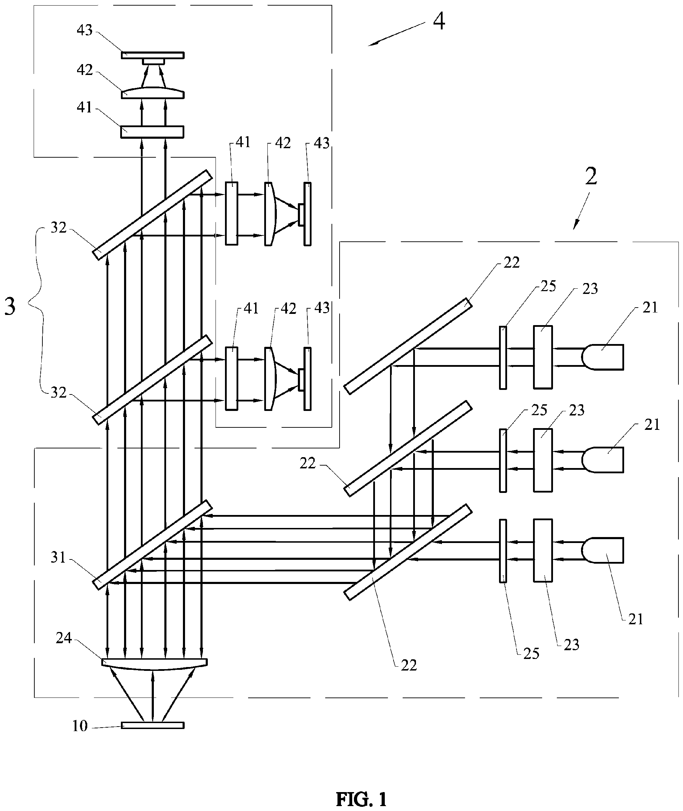

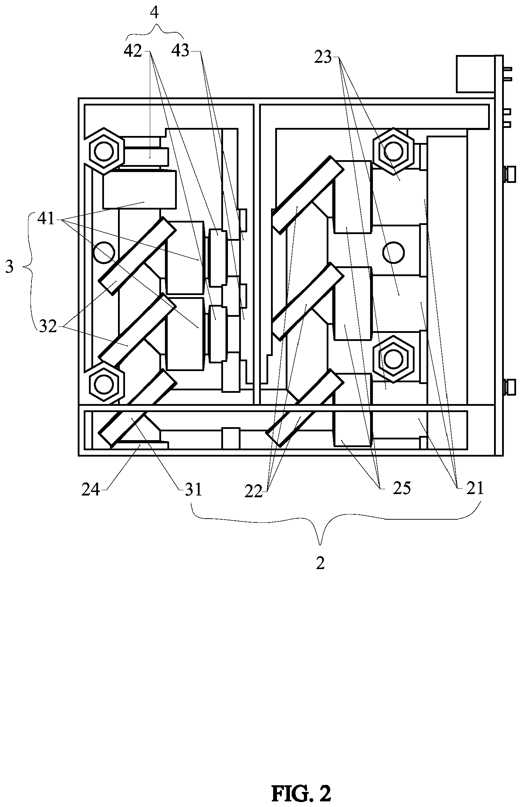

As shown in Figs. 1-2, an optical module for multi-wavelength fluorescence detection includes an excitation light source component 2, a color filter component 3 and a fluorescence receiving component 4.

The excitation light source component 2 has multiple excitation light channels. Specifically, the excitation light source component 2 includes a first dichroic mirror 31 and at least one light source 21 for generating irradiation light. The first dichroic mirror 31 is arranged at an irradiation light path of respective light sources 21. The excitation light source component 2 further includes a forth dichroic mirror 22, which is arranged between respective light sources 21 and the first dichroic mirror 31. In this embodiment, there are three light sources 21 and each of them is a LED or a laser. A first optical filter 25 is arranged between the light source 21 and the forth dichroic mirror 22. A collimation lens 23 is arranged between the forth dichroic mirror 22 and the light source 21. The irradiation lights from two of the light sources 21 are first transmitted sequentially through the collimation lens 23 and the first optical filter 25, then reflected by the forth dichroic mirror 22 to a corresponding surface of another forth dichroic mirror 22 and reflected to the first dichroic mirror 31. The irradiation light from another light source 21 is first transmitted through the collimation lens 23 and the first optical filter 25 to a corresponding surface of the corresponding forth dichroic mirror 22 directly and then transmitted to the first dichroic mirror 31. The forth dichroic mirror 22 used herein is a plane mirror with its two surfaces coated with a film. The irradiation lights from the three light sources 21 differ from each other in wavelength, and those skilled in the art can control the range of the irradiation light wavelength by selecting an appropriate film to generate excitation channels of light sources with different wavelengths. Besides, the excitation light source component 2 further includes a first convex lens 24 which is arranged at a reflection light path of the first dichroic mirror 31. The irradiation lights of different wavelengths irradiate the sample 10 through the first convex lens 24 to generate multiple fluorescence signals of different wavelengths. In this embodiment, three fluorescence signals of different wavelengths are directed to the first dichroic mirror 31 through the first convex lens 24 and then transmitted through the first dichroic mirror 31.

The color filter component 3 is used to form multiple fluorescence transmission paths. Specifically, the color filter component 3 is arranged at a transmission light path of the first dichroic mirror 31 and includes at least one second dichroic mirror 32 for receiving a fluorescence signal. It can be understood that in the presence of three or more light sources 21, the sample 10 can be excited to generate fluorescence signals of three or more wavelengths. At this time, two or more second dichroic mirrors 32 are required, and individual second dichroic mirrors 32 are arranged in sequence, and the second dichroic mirror 32 adjacent to the first dichroic mirror 31 is arranged at the transmission light path of the first dichroic mirror 31 and the second dichroic mirror 32 away from the first dichroic mirror 31 is arranged at a transmission light path of the former second dichroic mirror 32. Three light sources are employed herein which indicates that the sample 10 will be excited to generate three fluorescence signals of different wavelengths. Therefore, two second dichroic mirrors 32 having different wavelength ranges of reflection light and transmission light are selected and the latter second dichroic mirror 32 is arranged at the transmission light path of the former second dichroic mirror 32 and the former second dichroic mirror 32 is arranged at the transmission light path of the first dichroic mirror 31. Those skilled in the art can select the second dichroic mirror 32 of an appropriate model, and the specific model will not be described herein. In this embodiment, one of the three fluorescence signals is reflected by the former second dichroic mirror 32 to generate the first fluorescence transmission path; one of the three fluorescence signals is transmitted by the former second dichroic mirror 32 and reflected by the latter second dichroic mirror 32 to generate the second fluorescence transmission path; and another fluorescence signal is transmitted sequentially by the former and latter second dichroic mirrors 32 to generate the third fluorescence transmission path.

The fluorescence receiving component 4 has multiple fluorescence receiving channels and specifically includes a plurality of optical elements 43 which are photomultiplier tubes or photodiodes. Respective optical elements 43 are arranged at the refection light path and/or the transmission light path of the second dichroic mirrors 32. The fluorescence receiving component 4 further includes a plurality of second optical filters 41 and second convex lenses 42, where the second optical filter 41 and the second convex lens 42 are arranged between the optical element 43 and the corresponding second dichroic mirror 32. In this embodiment, three fluorescence signals of different wavelengths respectively travels along the three fluorescence transmission paths, and then sequentially pass through the second optical filter 41 and the second convex lens 42. Finally, these fluorescence signals are collected on the respective photomultiplier tubes and converted into electrical signals. In this embodiment, each optical element 43, second optical filter 41 and second convex lens 42 are configured together to form a fluorescence receiving channel.

It can be seen from Figs. 1-2 that the irradiation lights of three different wavelengths are taken as examples to excite the sample 10 to generate three fluorescence signals of different wavelengths, respectively. Those skilled in the art can optimize the forth dichroic mirror 22 and introduce irradiation lights of multiple different wavelengths to excite the sample 10 to generate multiple fluorescence signals of different wavelengths. For example, in the case that two irradiation lights of different wavelengths travel to the same side of the forth dichroic mirror 22, two reflection or transmission light paths may be formed as long as such two wavelengths are within the wavelength range of the refection or transmission light of the forth dichroic mirror 22. Certainly, the shape of the forth dichroic mirror 22 may be modified so that the irradiation light is combined into parallel beams and directed to the collimation lens 23. In addition, the second dichroic mirror 32 and the optical element 43 should be accordingly supplemented as the number of wavelengths of fluorescence signals increases, and the model of the second dichroic mirror 32 is also required to be selected based on respective fluorescence wavelengths. In the application, irradiation lights of multiple wavelengths can be emitted simultaneously or at intervals to excite the sample 10 to generate fluorescence signals of different wavelengths for detection. Moreover, there is no need to replace the optical filter and to repeatedly move the sample 10 during the detection. The application enables the instantaneous detection of fluorescence signals of multiple wavelengths, thereby improving the efficiency and reliability of the detection.

The embodiments of the invention are described in detail above with reference to the accompanying drawings, and are not intended to limit the invention. Various modifications made by those skilled in the art without departing from the spirit of the invention should still fall within the scope of the invention.

## Claims

1. An optical module for multi-wavelength fluorescence detection, **characterized by** comprising:
an excitation light source component (2) having at least one excitation light channel and comprising a first dichroic mirror (31) and at least one light source (21) for generating irradiation light, the first dichroic mirror (31) being arranged at an irradiation light path of respective light sources (21);
a color filter component (3) for forming multiple fluorescence transmission paths, the color filter component (3) being arranged at a transmission light path of the first dichroic mirror (31) and comprises at least one second dichroic mirror (32) for receiving a fluorescence signal; and
a fluorescence receiving component (4) having multiple fluorescence receiving channels and comprising a plurality of optical elements (43), each optical element (43) being arranged at a reflection light path and/or a transmission light path of the second dichroic mirror (32).

2. The optical module according to claim 1, **characterized in that** the excitation light source component (2) further comprises a forth dichroic mirror (22), and the forth dichroic mirror (22) is arranged between respective light sources (21) and the first dichroic mirror (31).

3. The optical module of claim 2, **characterized in that** a collimation lens (23) is arranged between the forth dichroic mirror (22) and respective light sources (21).

4. The optical module according to claim 3, **characterized in that** a first optical filter (25) is arranged between some of the light sources (21) and the forth dichroic mirror (22).

5. The optical module according to claim 4, **characterized in that** the excitation light source component (2) further comprises a first convex lens (24) which is arranged at a reflection light path of the first dichroic mirror (31).

6. The optical module according to claim 1, **characterized in that** at least two second dichroic mirrors (32) are sequentially arranged, and the second dichroic mirror (32) adjacent to the first dichroic mirror (31) is arranged at the transmission light path of the first dichroic mirror (31) and the second dichroic mirror (32) away from the first dichroic mirror (31) is arranged at a transmission light path of the former second dichroic mirror (32).

7. The optical module according to claim 1, **characterized in that** the fluorescence receiving component (4) further comprises a plurality of second optical filters (41) and second convex lenses (42) for collecting fluorescence signals on respective optical elements (43); and each second optical filter (41) and each second convex lens (42) are both arranged between each optical element (43) and respective second dichroic mirrors (32).

8. The optical module according to claim 7, **characterized in that** the optical elements (43) are photomultiplier tubes.

9. The optical module according to claim 1, **characterized in that** the light source (21) is a LED or laser.
